(19) **Europäisches Patentamt / European Patent Office / Office européen des brevets**

(11) **EP 4 697 064 A1**

(12) **EUROPEAN PATENT APPLICATION**

(43) Date of publication:
**18.02.2026 Bulletin 2026/08**

(21) Application number: **25179007.7**

(22) Date of filing: **27.05.2025**

(51) International Patent Classification (IPC):
**G01S 7/4865** (2020.01)

(52) Cooperative Patent Classification (CPC):
**G01S 7/4865; G01S 7/4866**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.08.2024 CN 202411116564**

(71) Applicant: **Realtek Semiconductor Corp.**
**HsinChu 30076 (TW)**

(72) Inventor: **ZHANG, RAN**
**Suzhou City (CN)**

(74) Representative: **Straus, Alexander**
**2K Patentanwälte - München**
**Bajuwarenring 14**
**82041 Oberhaching (DE)**

(54) **METHOD FOR ENHANCING TIMING PERFORMANCE OF ULTRA-WIDEBAND RANGING WITH AID OF PHASE DETECTION, AND ASSOCIATED APPARATUS**

(57) A method for enhancing timing performance of ultra-wideband (UWB) ranging with aid of phase detection and associated apparatus such as a communication circuit (121) and an electronic device (100) are provided. The method may include: utilizing a time coarse estimation circuit (210) within a UWB ranging processing circuit (124) to perform time coarse estimation according to a UWB signal to generate at least one time estimation result; and utilizing a time fine estimation circuit (230) within the UWB ranging processing circuit to perform time fine estimation according to the time estimation result to generate an estimated time; where the time coarse estimation circuit performs the phase detection according to a feature database (123) within the communication circuit and at least one feature obtained from the UWB signal, to generate at least one fractional part of the time estimation result, for enhancing time accuracy in advance to enhance the timing performance.

FIG. 2

## Description

Field of the Invention

The present invention is related to a method for enhancing timing performance of ultra-wideband (UWB) ranging with the aid of phase detection and associated apparatus such as a communication circuit and an electronic device according to the pre-characterizing clauses of claims 1, 9 and 10.

Background of the Invention

According to the related art, in a conventional UWB ranging time of flight (ToF) scheme, the final ranging report accuracy may depend on the accuracy of the report time, while in a baseband scheme, the timing accuracy may depend on the baseband sampling rate. For example, during UWB ranging, the time accuracy of cross-correlation operations may be quite limited, which may cause the overall performance that subsequent operations can achieve to be limited. Although some suggestions may be made to try solving this problem, there may be additional problems such as some side effects. In particular, when trying to increase the sampling rate, the associated costs such as the material costs may significantly increase. Thus, a novel method and associated architecture are needed for solving these problems in a way that is less likely to introduce a side effect.

Summary of the Invention

This in mind, the present invention aims at providing a method for enhancing timing performance of UWB ranging with the aid of phase detection, and associated apparatus such as a communication circuit and an electronic device.

This is achieved by a method for enhancing timing performance of UWB ranging with the aid of phase detection and associated apparatus according to the pre-characterizing clauses of claims 1, 9 and 10. The dependent claims pertain to corresponding further developments and improvements.

In one aspect, the disclosure features a method for enhancing timing performance of UWB ranging with the aid of phase detection, where the method is applicable to a UWB ranging processing circuit within a communication circuit. The UWB ranging processing circuit may be arranged to receive a UWB signal through at least one antenna of the communication circuit, and perform UWB ranging processing according to the UWB signal for the communication circuit. The method may comprise: utilizing a time coarse estimation circuit within the UWB ranging processing circuit to perform time coarse estimation according to the UWB signal to generate at least one time estimation result; and utilizing a time fine estimation circuit within the UWB ranging processing circuit to perform time fine estimation according to the at least one time estimation result to generate an estimated time, wherein an estimated distance of the UWB ranging corresponds to the estimated time; wherein the time coarse estimation circuit is arranged to perform the phase detection according to a feature database within the communication circuit and at least one feature obtained from the UWB signal, in order to generate at least one fractional part of the at least one time estimation result, for enhancing time accuracy in advance to enhance the timing performance.

In one aspect, the disclosure features a communication circuit for enhancing timing performance of UWB ranging with the aid of phase detection. The communication circuit may comprise a UWB ranging processing circuit that is coupled to at least one antenna of the communication circuit, and the UWB ranging processing circuit may be arranged to receive a UWB signal through the at least one antenna, and perform UWB ranging processing according to the UWB signal for the communication circuit. In addition, the UWB ranging processing circuit may comprise a time coarse estimation circuit and a time fine estimation circuit that is coupled to the time coarse estimation circuit. For example, the time coarse estimation circuit may be arranged to perform time coarse estimation according to the UWB signal to generate at least one time estimation result, and the time fine estimation circuit may be arranged to perform time fine estimation according to the at least one time estimation result to generate an estimated time, wherein an estimated distance of the UWB ranging corresponds to the estimated time. Additionally, the time coarse estimation circuit may be arranged to perform the phase detection according to a feature database within the communication circuit and at least one feature obtained from the UWB signal, in order to generate at least one fractional part of the at least one time estimation result, for enhancing time accuracy in advance to enhance the timing performance.

In one aspect, the disclosure features an electronic device which comprises the communication circuit mentioned above, wherein the electronic device further comprises a processor, and the processor may be arranged to control operations of the electronic device.

It is an advantage of the present invention that, through proper design, the method, the communication circuit and the electronic device of the present invention can enhance the time accuracy in a situation where the associated costs such as the material costs will not significantly increase. For example, the time coarse estimation circuit can perform the phase detection according to the feature database and the aforementioned at least one feature to generate the aforementioned at least one fractional part of the aforementioned at least one time estimation result, for enhancing the time accuracy before at least one subsequent operation to enhance the timing performance. In addition, the method, the communication circuit and the electronic device of the present invention can solve the problems in the related art in a way that is less likely to introduce a side effect.

Brief Description of the Drawings

In the following, the invention is further illustrated by way of example, taking reference to the accompanying drawings. Thereof

FIG. 1 is a schematic diagram of an electronic device according to an embodiment of the present invention, where the electronic device operates based on a method for enhancing timing performance of UWB ranging with the aid of phase detection in the present invention,

FIG. 2 illustrates a time accuracy enhancement control scheme of the method according to an embodiment of the present invention,

FIG. 3 illustrates some signals corresponding to multiple phases that are involved with the time accuracy enhancement control scheme shown in FIG. 2 according to an embodiment of the present invention,

FIG. 4 illustrates some cross-correlation curves corresponding to the multiple phases that are involved with the time accuracy enhancement control scheme shown in FIG. 2 according to an embodiment of the present invention,

FIG. 5 illustrates the relationship between the cumulative difference of the cross-correlation curves corresponding to more phases that are involved with the time accuracy enhancement control scheme shown in FIG. 2 and the phase index according to an embodiment of the present invention,

FIG. 6 illustrates an example of a first scrambled timestamp sequence (STS) packet configuration,

FIG. 7 illustrates an example of a second STS packet configuration, and

FIG. 8 illustrates a flowchart of the method according to an embodiment of the present invention.

Detailed Description

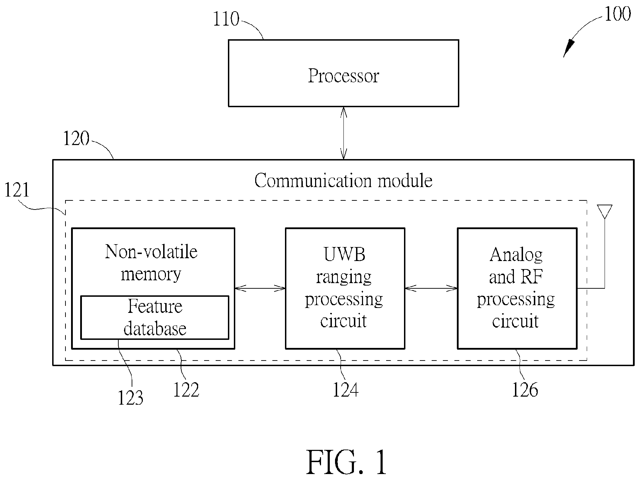

FIG. 1 is a schematic diagram of an electronic device 100 according to an embodiment of the present invention, where the electronic device 100 operates based on a method for enhancing timing performance of UWB ranging with the aid of phase detection in the present invention. The electronic device 100 may comprise a processor 110 and a communication module 120, and the communication module 120 may comprise a communication circuit 121 (e.g., a communication chip or a communication integrated circuit (IC)) and at least one antenna of the communication circuit 121. More particularly, the communication circuit 121 may comprise a non-volatile memory 122, a UWB ranging processing circuit 124 and an analog and radio frequency (RF) processing circuit 126. Examples of the electronic device 100 may include, but are not limited to: a multifunctional mobile phone and a wearable device.

The processor 110 may be arranged to control operations of the electronic device 100, and the communication circuit 121 may be arranged to perform wireless communication operations for the electronic device 100, and may enhance timing performance of UWB ranging with the aid of phase detection. In addition, the non-volatile memory 122 store information for the communication circuit 121, where the information may comprise a feature database 123. The analog and RF processing circuit 126 may perform analog and RF processing for the communication circuit 121, and the UWB ranging processing circuit 124 may receive a UWB signal through the aforementioned at least one antenna and the analog and RF processing circuit 126, and perform UWB ranging processing according to the UWB signal for the communication circuit 121.

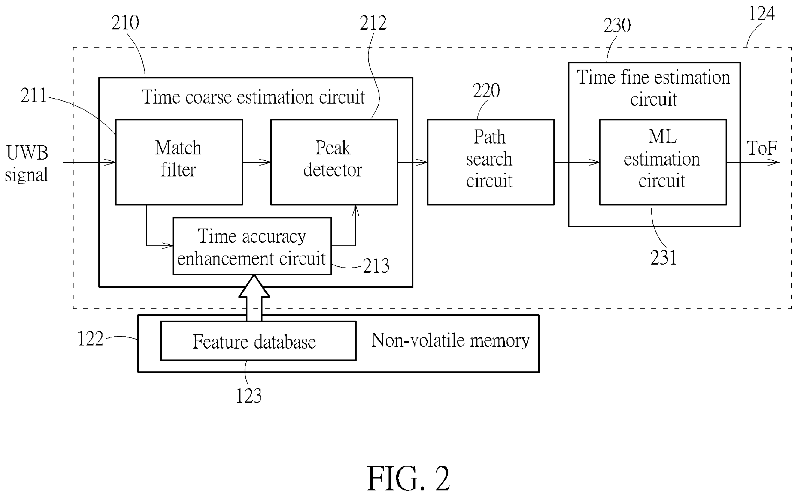

FIG. 2 illustrates a time accuracy enhancement control scheme of the method according to an embodiment of the present invention. The UWB ranging processing circuit 124 may comprise a time coarse estimation circuit 210, a path search circuit 220 and a time fine estimation circuit 230, where the time coarse estimation circuit 210 may comprise a match filter 211, a peak detector 212 and a time accuracy enhancement circuit 213, and the time fine estimation circuit 230 may comprise a maximum likelihood (ML) estimation circuit 231.

The time coarse estimation circuit 210 may perform time coarse estimation according to the UWB signal to generate at least one time estimation result, the path search circuit 220 may perform path search according to the aforementioned at least one time estimation result, for performing coarse locating processing within the UWB ranging processing, and the time fine estimation circuit 230 may perform time fine estimation according to the aforementioned at least one time estimation result to generate an estimated time such as a ToF, where an estimated distance of the UWB ranging may correspond to the estimated time such as the ToF. The time coarse estimation circuit 210 may perform the phase detection according to the feature database 123 and at least one feature obtained from the UWB signal, in order to generate at least one fractional part of the aforementioned at least one time estimation result, for enhancing time accuracy in advance to enhance the timing performance, for example, enhancing the time accuracy before at least one subsequent operation to enhance the timing performance, where the aforementioned at least one subsequent operation may comprise the operation of the time fine estimation circuit 230, such as the operation of performing the time fine estimation according to the aforementioned at least one time estimation result to generate the estimated time, and more particularly, comprise the respective operations of the path search circuit 220 and the time fine estimation circuit 230.

The match filter 211 may perform at least one match filtering operation on the UWB signal to generate at least one filtering result, where the aforementioned at least one feature may represent the aforementioned at least one feature of the aforementioned at least one filtering result. For example, the aforementioned at least one match filtering operation may be arranged to implement at least one cross-correlation operation regarding a first sequence carried by the UWB signal and a known sequence. In addition, the aforementioned at least one time estimation result may comprise at least one integer part and the aforementioned at least one fractional part. The peak detector 212 may perform peak detection on the aforementioned at least one filtering result to generate the aforementioned at least one integer part of the aforementioned at least one time estimation result. The time accuracy enhancement circuit 213 may perform the phase detection on the aforementioned at least one filtering result according to the feature database 123 and the aforementioned at least one feature of the aforementioned at least one filtering result to generate the aforementioned at least one fractional part of the aforementioned at least one time estimation result, for enhancing the time accuracy in advance to enhance the timing performance. Additionally, the ML estimation circuit 231 may perform ML estimation according to the aforementioned at least one integer part and the aforementioned at least one fractional part of the aforementioned at least one time estimation result to generate the estimated time. As the time accuracy enhancement circuit 213 within the time coarse estimation circuit 210 enhances the time accuracy in advance, the UWB ranging processing circuit 124 can enhance the timing performance without increasing the sampling rate.

Some implementation details regarding the phase detection may be further described as follows. First, considering phase matching, the associated factors may comprise the baseband data rate Rate_BB, the cross-correlation spectrum, etc. Assume that in a situation where Rate_BB = 499.2M * X (e.g., X may be a positive integer), the received UWB signal is the signal $x_1$ and the reference signal is the signal $x_2$. The cross-correlation $corr_{spectrum}$ of the signals $x_1$ and $x_2$ may be expressed as follows:

$$corr_{spectrum} = E(x_1(n) \, x_2(n));$$

where "E()" may represent a cross-correlation function. According to the generation principle of UWB synchronization header (SHR) and STS, the coding sequence CODE may be equivalent to a pulse sequence as shown below:

$$x(t) = p(t) \otimes CODE = \Sigma \, c(k) \, p(t - k\tau);$$

where "p(t)" may represent the pulse shape (or waveform), "c(k)" may represent the element in the coding sequence CODE, and "$\otimes$" may represent convolution. Theoretically, the basic pulses of the signals $x_1$ and $x_2$ are the same, but when the cross-correlation value reaches the maximum, the data may be merely aligned at the sampling rate and the ideal pulse may be sampled into pulses Pulse1 and Pulse2 of different phases. Regarding the cross-correlation curve in the interval (e.g., the interval from -4 nanoseconds (ns) to 4 ns) near the peak, assuming that the coding sequence CODE is aligned, the cross-correlation curve may be regarded as being completely determined by the pulse cross-correlation features as shown below:

$$corr_{spectrum} = E( \, \Sigma \, (c(k) \, p_1(t)) \, \Sigma \, (c(k) \, p_2(t - k\tau)) \, );$$
$$= E( \, \Sigma \, (p_1(t - k\tau) \, p_2(t - k\tau)) \, );$$
$$= \alpha \, E(p_1(t) \, p_2(t));$$

where "$\alpha$" may represent a coefficient.

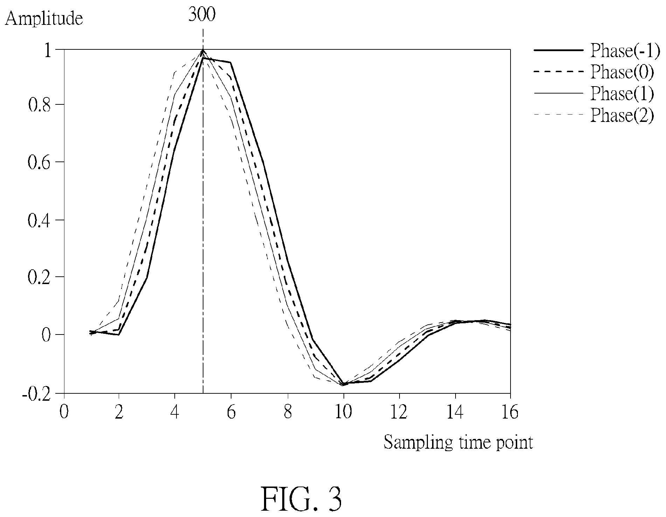

FIG. 3 illustrates some signals corresponding to multiple phases (e.g., four phases {Phase(-1), Phase(0), Phase(1), Phase(2)} which are 90 degrees different from each other and equally distributed over 360 degrees) that are involved with the time accuracy enhancement control scheme shown in FIG. 2 according to an embodiment of the present invention, where the horizontal axis may represent the sampling time point (e.g., the time measured in unit of the sampling period), and the vertical axis may represent the amplitude. For N-phase reference signals, such as the reference signals of N phases {Phase(1 - (N / 2)), ..., Phase(N / 2)} that are (360 / N) degrees different from each other and equally distributed over 360 degrees (if $N = m^2$ and "m" may be a positive integer greater than one), taking a 2 gigahertz (GHz) signal as an example, the sampling time points of the pulses of the normal reference signal are all at the pulse peak, and the phase thereof may be defined as zero phase such as the phase Phase(0). As shown in FIG. 3, at the sampling time point 300, the curve corresponding to the phase Phase(0) can reach the maximum value.

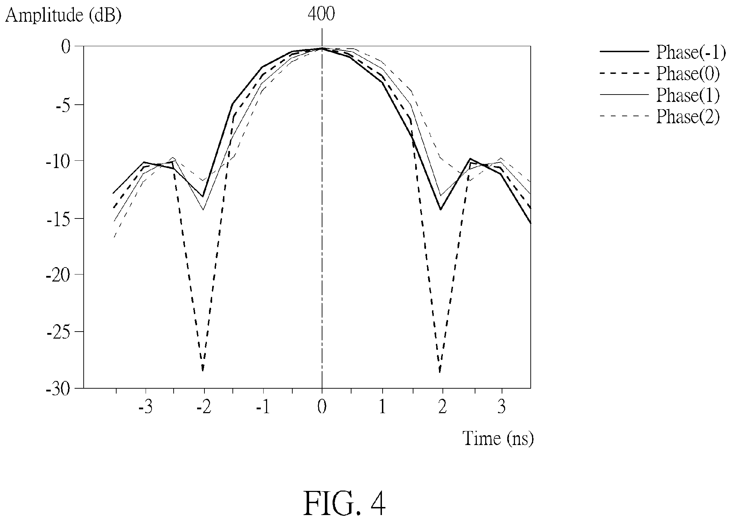

Assume that an 8 GHz signal may be sampled according to four 2 GHz signals of four phases {Phase(-1), Phase(0), Phase(1), Phase(2)} to be pulses corresponding to these four 2 GHz signals, respectively. In this situation, the respective cross-correlation curves of the pulse of the zero phase (e.g., the phase Phase(0)) and the pulses of other different phases (e.g., the phase {Phase(-1), Phase(1), Phase(2)}) (relative to the reference signal at the zero phase) can be illustrated as shown in FIG. 4.

FIG. 4 illustrates the cross-correlation curves corresponding to the multiple phases (e.g., the phases {Phase(-1), Phase(0), Phase(1), Phase(2)}) that are involved with the time accuracy enhancement control scheme shown in FIG. 2 according to an embodiment of the present invention, where the horizontal axis may represent time (in unit of ns), and the vertical axis may represent the amplitude (in unit of decibel (dB)). As the respective cross-correlation curves (relative to the reference signal at the zero phase) of the signals with different phases (e.g., the phases {Phase(-1), Phase(0), Phase(1), Phase(2)}) are different from each other, the communication circuit 121 operating according to the time accuracy enhancement control scheme may use the curve features to determine (or judge) the phase of the signal as which phase among the multiple phases (e.g., the phases {Phase(-1), Phase(0), Phase(1), Phase(2)}), in order to equivalently increase the time estimation rate of the signal from 2 GHz to 8 GHz.

In order to quickly determine the phase to obtain the estimated time immediately, the time accuracy enhancement control scheme provides at least two determination methods for performing feature determination:

(1) the zero-line feature determination method: as the maximum feature difference between different phases changes most significantly near the zero phase of the signal, when the received signal and the reference signal are in the same phase, the features of the zero-phase curve of the cross-correlation spectrum are the most significant (for example, the local curve in the cross-correlation spectrum is the deepest), and therefore may be used as a phase determination condition, where the features of the zero-phase curve are affected more severely by non-ideal factors (e.g., over-the-air (OTA) noise, thermal noise, quantization error and calculation accuracy error), which may cause the performance of the zero-line feature determination method to degrade and reduce the reliability of the determination; and

(2) the symmetry determination method: the main lobe of the ideal signal is symmetrical relative to the peak point 400 (i.e., the time point 400 where the peak is located), and the symmetry of signals with different phases is poor (due to the inability to totally sample at symmetrical points), which means that when performing cross-correlation with the received signal, if the phase is close to the zero phase, the symmetry of the cross-correlation curve relative to the peak point 400 will be better, otherwise, the symmetry of the cross-correlation curve relative to the peak point 400 will be worse, for example, when using the symmetry of the cross-correlation curve to make a determination, the communication circuit 121 may collect data within 8 ns before and after the peak point 400 for performing cumulative calculation;

wherein, as the symmetry difference mainly comes from the main lobe energy of the signal, the symmetry determination method will be more reliable than the zero-line feature determination method. In addition, the feature is limited by the signal bandwidth. Assuming that the signal bandwidth has been determined, when the number of phases is smaller, the symmetry gap between phases will be larger, so the determination will be more reliable.

No matter whether the zero-line feature determination method or the symmetry determination method is used, based on the time accuracy enhancement control scheme, the feature database 123 may comprise a set of feature and phase mapping information, for indicating the mapping relationships between multiple predefined features and the multiple phases (e.g., the phases {Phase(-1), Phase(0), Phase(1), Phase(2)}). The time coarse estimation circuit 210 (or the time accuracy enhancement circuit 213 therein) may compare the aforementioned at least one feature with at least one portion of predefined features among the multiple predefined features to find at least one matched feature from the multiple predefined features, and determine the aforementioned at least one fractional part of the aforementioned at least one time estimation result according to at least one phase corresponding to the aforementioned at least one matched feature among the multiple phases.

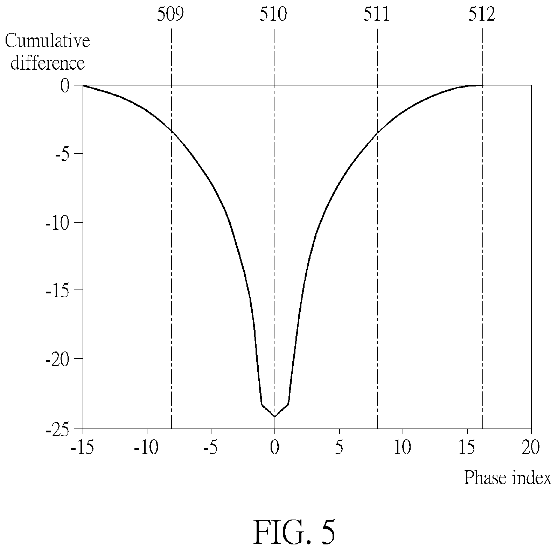

FIG. 5 illustrates the relationship between the cumulative difference of the cross-correlation curves corresponding to more phases (e.g., thirty-two phases {Phase(-15), ..., Phase(16)} which are 11.25 degrees different from each other and equally distributed over 360 degrees) that are involved with the time accuracy enhancement control scheme shown in FIG. 2 and the phase index according to an embodiment of the present invention, where the respective phase indices {-15, ..., 16} of the phases {Phase(-15), ..., Phase(16)} may be regarded as cyclic indices. For better comprehension, the horizontal axis may be extended to clearly illustrate the equivalent index positions {509, 510, 511, 512} of the equivalent indices {-8, 0, 8, 16} in FIG. 5 that are equivalent to the respective phase indices {-1, 0, 1, 2} of the four phases {Phase(-1), Phase(0), Phase(1), Phase(2)}, and therefore the redundant phase indices on the horizontal axis (e.g., the phase indices 17 to 20) may be ignored.

Some implementation details regarding the relationship between the equivalent phase count and the signal bandwidth may be further described as follows. The equivalent reliable sampling rate may be increased, but not indefinitely. When using 4 GHz × 32 phases to increase the equivalent sampling rate to 128 GHz (i.e., 4 GHz * 32 = 128 GHz), the differences between phases will be very small, making it difficult to determine which phase's similarity is more reliable than other phases. Taking calculating, starting from the phase Phase(-15), the cumulative difference of the feature curves of any two adjacent phases among the 32 phases {Phase(-15), ..., Phase(16)} (or the summation of the differences between the respective discrete values of the two cross-correlation curves of the above-mentioned any two adjacent phases) as an example, when the phase changes by one phase, the minimum cumulative difference value of the feature curves may only be 0.5 dB, and therefore it is difficult to make a stable judgment. In some examples, it may be feasible to increase the equivalent sampling rate to 64 GHz using 4 GHz × 16 phases or 2 GHz × 32 phases.

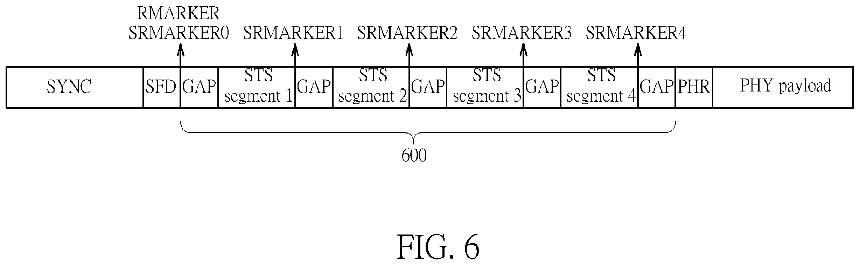

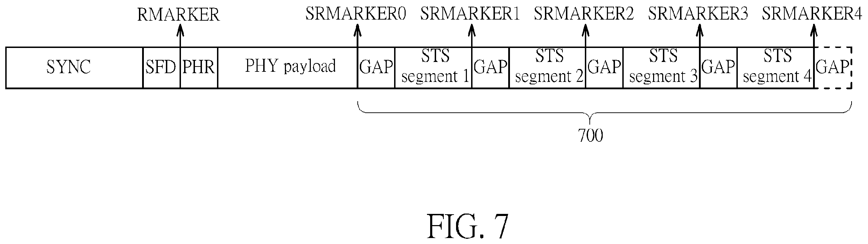

FIG. 6 illustrates an example of a first STS packet configuration, and FIG. 7 illustrates an example of a second STS packet configuration, where any frame format among these frame formats may comprise the synchronization (SYNC), the start-of-frame delimiter (SFD), the STS segments 1 to 4 and the gaps {GAP}, the physical layer (PHY) header (PHR) and the PHY payload (or the respective fields thereof), the above-mentioned SHR may comprise the SYNC and the SFD, and the respective partial formats 600 and 700 of these frame formats may be the same as or similar to each other. The electronic device 100 may be compatible or backward compatible with one or more versions of certain standards of the Institute of Electrical and Electronics Engineers (IEEE), and more particularly, may be compatible with the IEEE 802.15.4z standard. According to the specification of secure ranging of STS in the IEEE 802.15.4z standard, the electronic device 100 (or the communication circuit 201 therein) may determine the location of the ranging marker (RMARKER) through a cross-correlation operation. The ranging marker RMARKER may be regarded as the peak pulse position associated with the first chip after SFD, and may be used as a reference point for time measurement during the ranging process. The STS ranging markers SRMAKER0 to SRMAKER4 may be regarded as the peak pulse positions associated with the STS segments 1 to 4 and the gaps {GAP}.

In general, the accuracy of the ranging marker RMARKER may depend on the time accuracy of the cross-correlation, and the ability of using the ML time estimation of the ML estimation circuit 231 to enhance the time accuracy of the sampling point is limited, so if the performance of the signal bandwidth allows, a higher sampling rate will be more advantageous. For example, multiple channels used by the UWB ranging may comprise the UWB channels {0, 1, ..., 15}, and the respective UWB central frequencies {fc0, fc1, ... , fc15} of the UWB channels {0, 1, ..., 15} may be certain predetermined frequencies, and the respective UWB bandwidths {BW0, BW1, ..., BW15} of the UWB channels {0, 1, ..., 15} may be certain predetermined bandwidths. Regarding the above-mentioned coarse locating, when BW9 = 499.2 MHz of UWB channel 9 is used, the sampling rate of 4 GHz will have a greater advantage than the sampling rate of 499.2 MHz. As the time accuracy enhancement circuit 213 in the time coarse estimation circuit 210 enhances the time accuracy in advance, the UWB ranging processing circuit 124 can enhance the timing performance without increasing the sampling rate. Therefore, the communication circuit 121 and the electronic device 100 operating according to the method can enhance the time accuracy without significantly increasing the associated costs such as the material costs.

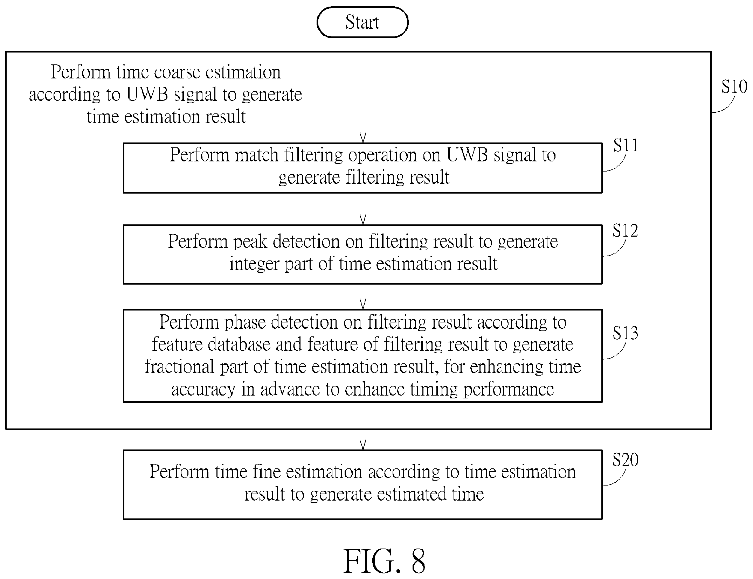

FIG. 8 illustrates a flowchart of the method according to an embodiment of the present invention. The method can be applied to the communication circuit 121, and more particularly, can be applied to the UWB ranging processing circuit 124 and the components therein.

In Step S10, the communication circuit 121 may utilize the time coarse estimation circuit 210 within the UWB ranging processing circuit 124 to perform the time coarse estimation according to the UWB signal to generate the aforementioned at least one time estimation result. Step S10 may comprise multiple sub-steps such as Steps S11 to S13.

In Step S11, the communication circuit 121 may utilize the match filter 211 within the UWB ranging processing circuit 124 to perform the aforementioned at least one match filtering operation on the UWB signal to generate the aforementioned at least one filtering result.

In Step S12, the communication circuit 121 may utilize the peak detector 212 within the UWB ranging processing circuit 124 to perform the peak detection on the aforementioned at least one filtering result to generate the aforementioned at least one integer part of the aforementioned at least one time estimation result.

In Step S13, the communication circuit 121 may utilize the time accuracy enhancement circuit 213 within the UWB ranging processing circuit 124 to perform the phase detection on the aforementioned at least one filtering result according to the feature database 123 and the aforementioned at least one feature of the aforementioned at least one filtering result to generate the aforementioned at least one fractional part of the aforementioned at least one time estimation result, for enhancing the time accuracy in advance to enhance the timing performance.

In Step S20, the communication circuit 121 may utilize the time fine estimation circuit 230 within the UWB ranging processing circuit 124 to perform the time fine estimation according to the aforementioned at least one time estimation result to generate the estimated time such as the ToF, where the estimated distance of the UWB ranging corresponds to the estimated time such as the ToF. For brevity, similar descriptions for this embodiment are not repeated in detail here.

The method may be illustrated with the working flow shown in FIG. 8. According to some embodiments, one or more steps may be added, deleted, or changed in the working flow shown in FIG. 8.

**Claims**

1.  A communication circuit (121), for enhancing timing performance of ultra-wideband (UWB) ranging with aid of phase detection, **characterized in that** the communication circuit (121) comprises:
    a UWB ranging processing circuit (124), coupled to at least one antenna of the communication circuit (121), arranged to receive a UWB signal through the at least one antenna, and perform UWB ranging processing according to the UWB signal for the communication circuit (121), the UWB ranging processing circuit (124) comprising:

    a time coarse estimation circuit (210), arranged to perform time coarse estimation according to the UWB signal to generate at least one time estimation result; and
    a time fine estimation circuit (230), coupled to the time coarse estimation circuit (210), arranged to perform time fine estimation according to the at least one time estimation result to generate an estimated time, wherein an estimated distance of the UWB ranging corresponds to the estimated time;
    wherein the time coarse estimation circuit (210) is arranged to perform the phase detection according to a feature database (123) within the communication circuit (121) and at least one feature obtained from the UWB signal, in order to generate at least one fractional part of the at least one time estimation result, for enhancing time accuracy in advance to enhance the timing performance.

2.  The communication circuit (121) of claim 1, **characterized in that** the time coarse estimation circuit (210) is arranged to perform the phase detection according to the feature database (123) and the at least one feature to generate the at least one fractional part of the at least one time estimation result, for enhancing the time accuracy before at least one subsequent operation to enhance the timing performance, wherein the at least one subsequent operation comprises an operation of performing the time fine estimation according to the at least one time estimation result to generate the estimated time.

3.  The communication circuit (121) of claim 1, **characterized in that** the at least one time estimation result comprises at least one integer part and the at least one fractional part;
    and the time coarse estimation circuit (210) comprises:

    a match filter (211), arranged to perform at least one match filtering operation on the UWB signal to generate at least one filtering result, wherein the at least one feature represents the at least one feature of the at least one filtering result;
    a peak detector (212), coupled to the match filter (211), arranged to perform peak detection on the at least one filtering result to generate the at least one integer part of the at least one time estimation result; and
    a time accuracy enhancement circuit (213), coupled to the peak detector (212), arranged to perform the phase detection on the at least one filtering result according to the feature database (123) and the at least one feature of the at least one filtering result to generate the at least one fractional part of the at least one time estimation result, for enhancing the time accuracy in advance to enhance the timing performance.

4.  The communication circuit (121) of claim 3, **characterized in that** the at least one match filtering operation is arranged to implement at least one cross-correlation operation regarding a first sequence carried by the UWB signal and a known sequence.

5.  The communication circuit (121) of claim 1, **characterized in that** the UWB ranging processing circuit (124) further comprises:
    a path search circuit (220), coupled between the time coarse estimation circuit (210) and the time fine estimation circuit (230), arranged to perform path search according to the at least one time estimation result, for performing coarse locating processing within the UWB ranging processing.

6.  The communication circuit (121) of claim 1, **characterized in that** the at least one time estimation result comprises at least one integer part and the at least one fractional part; and the time fine estimation circuit (230) comprises:
    a maximum likelihood (ML) estimation circuit (231), coupled to the time coarse estimation circuit (210), arranged to perform ML estimation according to the at least one integer part and the at least one fractional part of the at least one time estimation result to generate the estimated time.

7.  The communication circuit (121) of claim 1, **characterized in that** the communication circuit (121) further comprises:

    an analog and radio frequency (RF) processing circuit (126), coupled between the at least one antenna and the UWB ranging processing circuit (124), arranged to perform analog and RF processing for the communication circuit (121); and

a non-volatile memory (122), coupled to the UWB ranging processing circuit (124), arranged to store information for the communication circuit (121), wherein the information comprises the feature database (123).

8. The communication circuit (121) of claim 1, **characterized in that** the feature database (123) comprises a set of feature and phase mapping information, for indicating mapping relationships between multiple predefined features and multiple phases; and the time coarse estimation circuit (210) is arranged to compare the at least one feature with at least one portion of predefined features among the multiple predefined features to find at least one matched feature from the multiple predefined features, and determine the at least one fractional part of the at least one time estimation result according to at least one phase corresponding to the at least one matched feature among the multiple phases.

9. An electronic device (100) which comprises the communication circuit (121) of claim 1, **characterized in that** the electronic device (100) further comprises:

a processor (110), arranged to control operations of the electronic device (100).

10. A method for enhancing timing performance of ultra-wideband (UWB) ranging with aid of phase detection, the method being applied to a UWB ranging processing circuit (124) within a communication circuit (121), the UWB ranging processing circuit (124) being arranged to receive a UWB signal through at least one antenna of the communication circuit (121), and perform UWB ranging processing according to the UWB signal for the communication circuit (121), **characterized in that** the method comprises:

utilizing a time coarse estimation circuit (210) within the UWB ranging processing circuit (124) to perform time coarse estimation according to the UWB signal to generate at least one time estimation result; and

utilizing a time fine estimation circuit (230) within the UWB ranging processing circuit (124) to perform time fine estimation according to the at least one time estimation result to generate an estimated time, wherein an estimated distance of the UWB ranging corresponds to the estimated time;

wherein the time coarse estimation circuit (210) is arranged to perform the phase detection according to a feature database (123) within the communication circuit (121) and at least one feature obtained from the UWB signal, in order to generate at least one fractional part of the at least one time estimation result, for enhancing time accuracy in advance to enhance the timing performance.

EP 4 697 064 A1

110

Processor

100

120

Communication module

121

Non-volatile
memory

Feature
database

UWB
ranging
processing
circuit

Analog
and RF
processing
circuit

123    122              124              126

FIG. 1

FIG. 2

EP 4 697 064 A1

FIG. 3

EP 4 697 064 A1

FIG. 4

FIG. 5

RMARKER
SRMARKER0    SRMARKER1    SRMARKER2    SRMARKER3    SRMARKER4

| SYNC | SFD | GAP | STS segment 1 | GAP | STS segment 2 | GAP | STS segment 3 | GAP | STS segment 4 | GAP | PHR | PHY payload |

600

FIG. 6

FIG. 7

```
                              ┌─────────────┐
                              │    Start    │
                              └──────┬──────┘
                                     │
┌──────────────────────────────────────────────────────────┐
│                                     │                      │  S10
│  Perform time coarse estimation     │                      │
│  according to UWB signal to generate│                      │
│  time estimation result             │                      │
│                                     ▼                      │
│  ┌──────────────────────────────────────────────┐  S11    │
│  │  Perform match filtering operation on UWB      │        │
│  │  signal to generate filtering result           │        │
│  └──────────────────────┬───────────────────────┘        │
│                         ▼                                  │
│  ┌──────────────────────────────────────────────┐  S12    │
│  │  Perform peak detection on filtering result    │        │
│  │  to generate integer part of time estimation   │        │
│  │  result                                        │        │
│  └──────────────────────┬───────────────────────┘        │
│                         ▼                                  │
│  ┌──────────────────────────────────────────────┐  S13    │
│  │  Perform phase detection on filtering result   │        │
│  │  according to feature database and feature of  │        │
│  │  filtering result to generate fractional part  │        │
│  │  of time estimation result, for enhancing time │        │
│  │  accuracy in advance to enhance timing         │        │
│  │  performance                                   │        │
│  └──────────────────────┬───────────────────────┘        │
└─────────────────────────┼──────────────────────────────┘
                          ▼
   ┌──────────────────────────────────────────────┐  S20
   │  Perform time fine estimation according to     │
   │  time estimation result to generate estimated  │
   │  time                                          │
   └────────────────────────────────────────────────┘
```

FIG. 8

Europäisches
Patentamt

European
Patent Office

Office européen
des brevets

## EUROPEAN SEARCH REPORT

**Application Number**

EP 25 17 9007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JORGE A PARDINAS-MIR ET AL: "A fast low-cost TOA estimation for UWB impulse radio networks", COMMUNICATIONS (COMM), 2012 9TH INTERNATIONAL CONFERENCE ON, IEEE, 21 June 2012 (2012-06-21), pages 27-30, XP032220451, DOI: 10.1109/ICCOMM.2012.6262571 ISBN: 978-1-4577-0057-6 | 1-5,7,9, 10 | INV. G01S7/4865 |
| Y | * the whole document * | 6 | |
| A | | 8 | |
| | ----- | | |
| Y | CHEHRI A ET AL: "Time-of-arrival estimation for IR-UWB systems based on two step energy detection", COMMUNICATIONS, 2008 24TH BIENNIAL SYMPOSIUM ON, IEEE, PISCATAWAY, NJ, USA, 24 June 2008 (2008-06-24), pages 369-373, XP031285828, ISBN: 978-1-4244-1945-6 | 6 | |
| A | * page 369 - page 371 * | 1-5,7-10 | TECHNICAL FIELDS SEARCHED (IPC) |
| | ----- | | |
| A | US 8 199 047 B2 (FRETENBURG RUSSELL ALAN [CA]; LEUNG HENRY HON-YOU [CA] ET AL.) 12 June 2012 (2012-06-12) * abstract; figures 3, 7 * * column 3, line 35 - column 6, line 15 * * column 8, line 57 - column 12, line 15 * * column 14, line 27 - column 16, line 46 * | 1-10 | G01S |
| | ----- | | |
| A | US 2014/198830 A1 (SEN DEBARATI [IN] ET AL) 17 July 2014 (2014-07-17) * the whole document * | 1-10 | |
| | ----- | | |
| | -/-- | | |

The present search report has been drawn up for all claims

| Place of search | Date of completion of the search | Examiner |
|---|---|---|
| Munich | 31 October 2025 | López de Valle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 17 9007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MONTSE NAJAR ET AL: "Joint synchronization and demodulation for IR-UWB", ULTRA-WIDEBAND, 2008. ICUWB 2008. IEEE INTERNATIONAL CONFERENCE ON, IEEE, PISCATAWAY, NJ, USA, 10 September 2008 (2008-09-10), pages 55-58, XP031350146, ISBN: 978-1-4244-2216-6 * the whole document * ----- | 1-10 | |

TECHNICAL FIELDS
SEARCHED        (IPC)

The present search report has been drawn up for all claims

| Place of search | Date of completion of the search | Examiner |
|---|---|---|
| Munich | 31 October 2025 | López de Valle, J |

EPO FORM 1503 03.82 (P04C01)

## ANNEX TO THE EUROPEAN SEARCH REPORT
## ON EUROPEAN PATENT APPLICATION NO.

EP 25 17 9007

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2025

| Patent document cited in search report | | Publication date | Patent family member(s) | | Publication date |
|---|---|---|---|---|---|
| US 8199047 | B2 | 12-06-2012 | US | 2011221632 A1 | 15-09-2011 |
| | | | US | 2012133558 A1 | 31-05-2012 |
| | | | WO | 2011112366 A1 | 15-09-2011 |
| US 2014198830 | A1 | 17-07-2014 | NONE | | |

EPO FORM P0459

For more details about this annex : see Official Journal of the European Patent Office, No. 12/82